# EUROPEAN PATENT SPECIFICATION

(11) **EP 1 240 937 B1**
(45) Date of publication and mention of the grant of the patent: **18.11.2009**
(21) Application number: 01119737.3
(22) Date of filing: 27.08.2001
(51) Int. Cl.: B01D 53/68, B01D 53/70, B01D 53/86

(54) **Method and apparatus for treating perfluorocompounds**
Verfahren und Vorrichtung zur Beseitigung von Perfluorverbindungen
Procédé et dispositif pour l'élimination des composés perfluorés

(30) Priority: 16.03.2001 JP 2001075241
(43) Date of publication of application: 18.09.2002
(73) Proprietor: Hitachi, Ltd., Tokyo 100-8280 (JP)
(72) Inventor: Tamata, Shin, Hitachi, Ltd., Int. Prop. Gp., Chiyoda-ku, Tokyo 100-8220 (JP); Koukun, Ri, Hitachi, Ltd., Int. Prop. Gp., Chiyoda-ku, Tokyo 100-8220 (JP); Irie, Kazuyoshi, Hitachi, Ltd., Int. Prop. Gp., Chiyoda-ku, Tokyo 100-8220 (JP); Shibano, Yoshiki, Hitachi, Ltd., Int. Prop. Gp., Chiyoda-ku, Tokyo 100-8220 (JP); Kanno, Shuichi, Hitachi, Ltd., Int. Prop. Gp., Chiyoda-ku, Tokyo 100-8220 (JP)
(74) Representative: MERH-IP Matias Erny Reichl Hoffmann

(56) References cited:
- EP-A- 0 885 648
- EP-A- 0 916 388
- EP-A- 1 027 918
- EP-A- 1 101 524

## Description

### BACKGROUND OF THE INVENTION

The present invention relates to a method and an apparatus for treating perfluorocompunds, particularly to a method and an apparatus for treating perfluorocompounds, suitable for decomposition of perfluorocompounds discharged from a semiconductor production palnt.

"Perfluorocompounds" is a general term for compounds of carbon and fluorine; carbon, hydrogen and fluorine; sulfur and fluorine; and nitrogen and fluorine, such as CF₄, CHF₃, C₂F₆, CH₂F₂, C₃F₈, C₅F₈, SF₆, NF₃, etc. which are all free from chlorine. Perfluorocompounds (which will be hereinafter referred to as "PFC") are in a gaseous state and are used as an etching gas and a cleaning gas in the semiconductor production method. PFC has a long life (e.g. 10,000 years in the case of C₂F₆ and 3,200 years in the case of SF₆) and is considered one of global warming gases with a high warming coefficient, which are subject to atmospheric emission control. Thus, various PFC-decomposing methods have been so far studied. One of the methods is disclosed in JP-A-11-70322 and JP-A-11-319485, where PFC is hydrolyzed in the presence of a catalyst, and the discharged gas containing the decomposition gases resulting from the PFC decomposition is washed with water (or an aqueous alkaline solution) and then discharged by a blower.

A higher reliability is required for apparatuses relating to the semiconductor production in a semiconductor production plant from the viewpoint of continuous operation of apparatuses for producing semiconductors. A higher reliability is also required for an apparatus for treating PFC contained in the discharged gas from etching apparatuses, because, if it is out of order, operation of several etching apparatuses connected thereto must be shut down.

### SUMMARY OF THE INVENTION

An object of the present invention is to provide a method and an apparatus for treating perfluorocompounds, capable of reducing the frequency of apparatus maintenance inspection.

The above probem is solved according to the independent claims.

According to the present invention, the discharged gas containing acid gases generated by decomposition of perfluorocompounds is sucked by a jet stream of an injected gas, thereby ejecting the discharged gas. Since the discharged gas is sucked and ejected by a jet stream gas of an injected gas, the gas suction apparatus for use in the present invention has no driving parts, and thus the frequency of apparatus maintenance inspection can be considerably reduced, resulting in remarkable reduction in the frequency of maintenance inspection of an apparatus for treating perfluorocompounds and an increase in the continuous operating rate of the apparatus for treating perfluorocompounds. Particularly, in the case of a perfluorocompounds-containing discharged gas from a semiconductor producing apparatus, the reduction in the frequency of maintenance inspection of the apparatus for treating perfluorocompounds means an increase in the continuous operating rate of the semiconductor producing apparatus, resulting in a considerable increase in the semiconductor production efficiency. It is desirable to use an ejector as a gas suction apparatus.

Since the discharged gas containing acid gases generated by decomposition of perfluorocompounds is preferably brought into contact with one of water and an aqueous alkaline solution, the acid gases can be simply removed from the discharged gas. Furthermore, since mists generated by contact with one of water and an aqueous alkaline solution can be separated from the discharged gas, corrosion of downstream machinery and apparatuses, and pipings (or ducts) in contact with the discharged gas can be remarkably reduced.

A tank for receiving one of the water and the aqueous alkaline solution discharged from the acid gas removing apparatus below the acid gas removing apparatus and a mist separator are provided. The water or the aqueous alkaline solution discharged from the acid gas removing apparatus can be collected into the tank simply by gravity. Furthermore, the mists separated in the mist separator can be discharged into the tank simply by gravity through a discharge piping. No power is required for collecting the water or the aqueous alkaline solution and the separated mists, so the structure of the apparatus for treating perfluorocompounds can be simplified.

Decomposition of perfluorocompounds is catalytically carried out, where preferably a catalyst contains an Al oxide and further contains at least one of oxides of metals selected from Zn, Ni, Ti, Fe, Sn, Co, Zr, Ce, Si and Pt. By use of such a catalyst, the perfluorocompounds can be efficiently decomposed at low temperatures of 200°-800°C. It is particularly preferable to use the catalyst in the form of Al-containing composite oxide such as NiAl₂O₄ and ZnAl₂O₄.

### BRIEF DESCRPTION OF THE DRAWINGS

Fig. 1 is a structural diagram of an apparatus for treating perfluorocompounds according to one preferable embodiment of the present invention.
Fig. 2 is a structural diagram of a semiconductor production plant in which the present apparatus for treating perfluorocompounds is incorporated.
Fig. 3 is a vertical cross-sectional view of the cyclone shown in Fig. 1.
Fig. 4 is a cross-sectional view along the line IV-IV of Fig. 3.
Fig. 5 is a vertical cross-sectional view of ejector shown in Fig. 1.
Fig. 6 is an enlarged cross-sectional view of zone VI of Fig. 5.
Fig. 7 is a vertical cross-sectional view of discharged water tank shown in Fig. 1.
Fig. 8 is a diagram showing evacuating characteristics of ejector of Fig. 5.
Fig. 9 is a structural diagram of an apparatus for treating perfluorocompounds according to another preferable embodiment of the present invention.
Fig. 10 is a structural diagram of another example of a semiconductor production plant in which the present apparatus for treating perfluorocompounds is incorporated.

In the foregoing drawings, reference numerals have the following designations:
1: apparatus for treating perfluorocompounds; 2: reactor; 3: catalyst cartridge; 4: heater; 6: cooling chamber; 7, 11 and 15: sprays; 8: inlet packed column; 10: spray column; 12: discharged water tank; 13: discharged gas washing column; 16: cyclone; 19: lower compartment; 20: upper compartment; 24: ejector; 25: ejector body; 27: injection nozzle; 28: nozzle member; 29: injection member; 30: injection orifice; 34: ejection nozzle, 35: ejection passage; 46: discharged water piping; 50, 51 and 52: water feed pipes; 56: air feed pipe; 62: liquid level; 63: pressure control value; 67 and 70: etching apparatuses; 73A, 73B, 73C and 73D: vacuum pumps; 81: compressed air feeder; 82: pretreating apparatus.

### DETAILED DESCRIPTION OF THE INVENTION

In the course of development of a series of apparatuses for decomposing PFC and treating, and ejecting the discharged gas from the decomposition treatment, the present inventors have found that blowers for transferring the discharged gas from the treatment are highly corroded by acid gases remaining in the discharged gas (the acid gases are generated by decomposition of PFC), which plays an important role in the improvement of the continuous operating rate of the apparatus for treating perfluorocompounds (which may be hereinafter referred to as "PFC treating apparatus"). A result of studies made on the corrosion of blowers by the present inventors will be described below:

In the catalytic decomposition of PFC disclosed in JP-A-11-70322, decomposition gases are generated. That is, the decomposition of CF₄ results in the generation of CO₂ and HF, the decomposition of SF₆ results in the generation of SO₃ and HF, and the decomposition of NF₃ results in the generation of NOₓ (NO and NO₂) and HF. In this manner, decomposition of PFC results in the formation of various acid gases (HF, SO₃ and NOₓ). The foregoing decomposition reactions can be given by the following reaction equations:

CF₄ + 2H₂O → CO₂ + 4HF (1)

SF₆ + 3H₂O → SO₃, + 6HF (2)

2NF₃ + 3H₂O → NO + NO₂ + 6HF (3)

Acid gases (SO₃, HF, NO and NO₂) as decomposition gases of PFC can be absorbed into water (or an aqueous alkaline solution) in a discharged gas washing column and removed from the discharged gas thereby. However, as a result of tests, the present inventors have found that besides a small amount of acid gases, acid gas mists are discharged from the discharged gas washing column together with the discharged gas. For example, when a discharged gas containing 0.5% SF₆ was fed into a catalyst cartridge packed with a catalyst at a flow rate of 60 l/min to decompose SF₆, about 150 cm³/h of water (SO₃ mists) was discharged from the discharged gas washing column to which the discharged gas (containing SO₃) from the catalyst cartridge was fed. That is, acid gas components are carried over as mists, while taking up moisture. Once the moisture-containing SO₃ mists enter the blower, condensation of the SO₃ mists takes place in the impeller chamber of the blower, thereby further dissolving SO₃ into water to make a sulfuric acid solution. The sulfuric acid solution acts to corrode the blower. In the case that NF₃ is the PFC, a nitric acid solution is formed in the blower, corroding the blower. In the case that the blower is treated with an anticorrosive coating treatment, the anticorrosive coating treatment cannot be extended even to the bearings etc., of the blower, and thus the blower cannot be operated continuously for a long time. Furthermore, the frequency of maintenance inspection of the blower upon discontinuation of continuous operation will be inevitably increased, and the continuous operating rate of the PFC treating apparatus will be lowered.

To prevent carry-over of corrosive acid gas mists through the course from the discharged gas washing column to the blower, it has been proposed to provide a mist separator, but a 100% removal of acid gas mists (sulfuric acid mist and nitric acid mist) has been difficult to attain even by the mist separator. The acid gas mists not removed by the mist separator still act to corrode the blower, as mentioned above.

The present inventors have found, for the first time, that not only leading to the blower of the acid gas mists not removed in the discharged gas washing column and discharged therefrom, but also the acid gas mists corrodes the blower. It is difficult to completely remove the acid gas mists in the mist separator. Blower corrosion has an adverse effect on the semiconductor production, while increasing the frequency of maintenance inspection such as inspection, cleaning, part replacement, etc. upon shutting down the blower. The present inventors have reached a conclusion that a gas ejecting apparatus with no driving part must be used in place of the blower, and have decided to use a gas ejecting apparatus capable of sucking the discharged gas by a jet stream of an injected gas (e.g. an ejector).

A specific example of a PFC treating apparatus with such a gas ejecting apparatus capable of sucking the discharged gas by a jet stream of an injected gas will be described below.

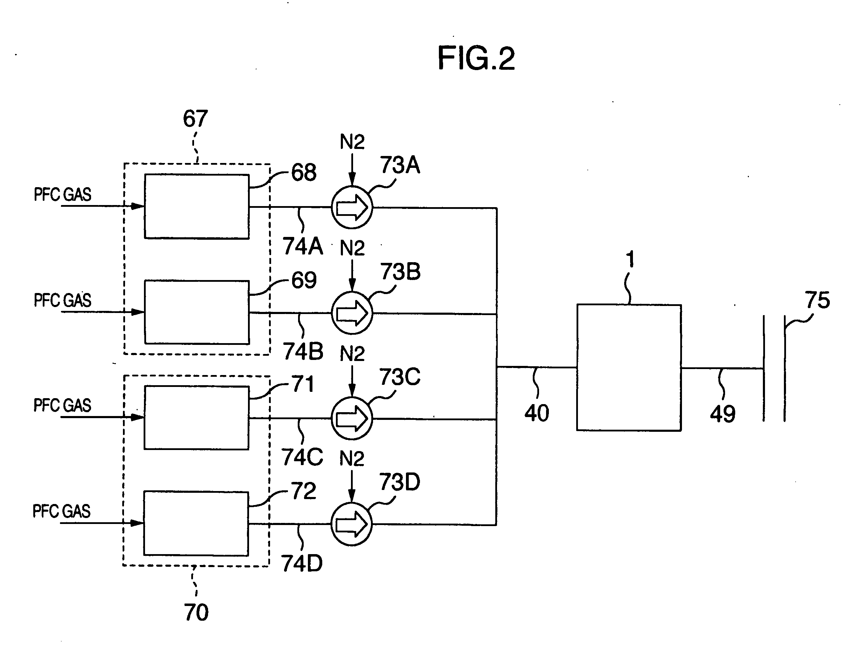

At first, a semiconductor production plant in which the present PFC treating apparatus is incorporated will be outlined, referring to Fig. 2.

The semiconductor production plant comprises a semiconductor production apparatus and a discharged gas treating apparatus for treating the discharged gas from the semiconductor production apparatus. The semiconductor production apparatus is provided with, for example, an etching apparatus 67 with etching chambers 68 and 69 and an etching apparatus 70 with etching chambers 71 and 72. As the discharged gas treating apparatus, a PFC treating apparatus 1 for treating PFC-containing discharged gas from etching chambers 68, 69, 71 and 72 is used. Gas discharge pipes 74A, 74B, 74C and 74D connected to the etching chambers 68, 69, 71 and 72, respectively, are put into one piping 40. The PFC treating apparatus 1 is connected to a piping 40 on one hand, and to a discharged gas duct 75 through a piping 49 on the other hand. Vacuum pumps 73A, 73B, 73C and 73D are provided in the gas discharge pipes 74A, 74B, 74C and 74D, respectively.

PFC gas as an etching gas is fed to the etching chambers 68, 69, 71 and 72, each in a vacuum state, respectively. The PFC gas is brought into a plasma state to conduct etching treatments of wafers as semiconductor materials. A portion (10-30%) of the PFC gas fed to the etching chambers 68, 69, 71 and 72 is consumed by the etching treatments in the etching chambers. By driving the vacuum pumps 73A, 73B, 73C and 73D, discharged gases from the etching chambers 68, 69, 71 and 72 are passed through the gas discharge pipes 74A, 74B, 74C and 74D, respectively, joined into the piping 40 and fed to the PFC treating apparatus 1. The discharged gas contains PFC gas not consumed in the etching chambers 68, 69, 71 and 72. Still furthermore, the discharged gas contains HF secondarily generated from the PFC gas in the etching chambers, SiF₄, etc. generated by etching the wafers. To protect the bearings, etc. of the vacuum pumps 73A, 73B, 73C and 73D for bringing the etching chambers 68, 69, 71 and 72 into a negative pressure state from HF as a corrosive acid gas, N₂ gas is fed to the bearings of the vacuum pumps. That is, the PFC concentration of the discharged gas led to PFC treating apparatus 1 is approximately 0.5%. The PFC gas is decomposed in the PFC treating apparatus 1. The discharged gas from the PFC treating apparatus 1 is discharged to the discharged gas duct 75 through the piping 49. The PFC concentration of the gas discharged to the PFC treating apparatus 1 and that of the gas discharged from the PFC treating apparatus 1 are measured. The PFC concentration of the discharged gas from the PFC treating apparatus 1 is monitored, and when the concentration exceeds a set concentration, an alarm is given. Still furthermore, the soundness of the catalytic reaction or the timing of catalyst exchange due to catalyst degradation is checked from the decomposition ratio calculated from the PFC concentrations between the inlet and the outlet of the PFC treating apparatus 1.

### DESCRIPTION OF PREFERRED EMBODIMENTS

Several embodiments of the present PFC treating apparatus applied to the treatment of a discharged gas from the semiconductor production will be described in detail below. Throughout the drawings showing the embodiments, the same structural members are identified with the same reference numerals.

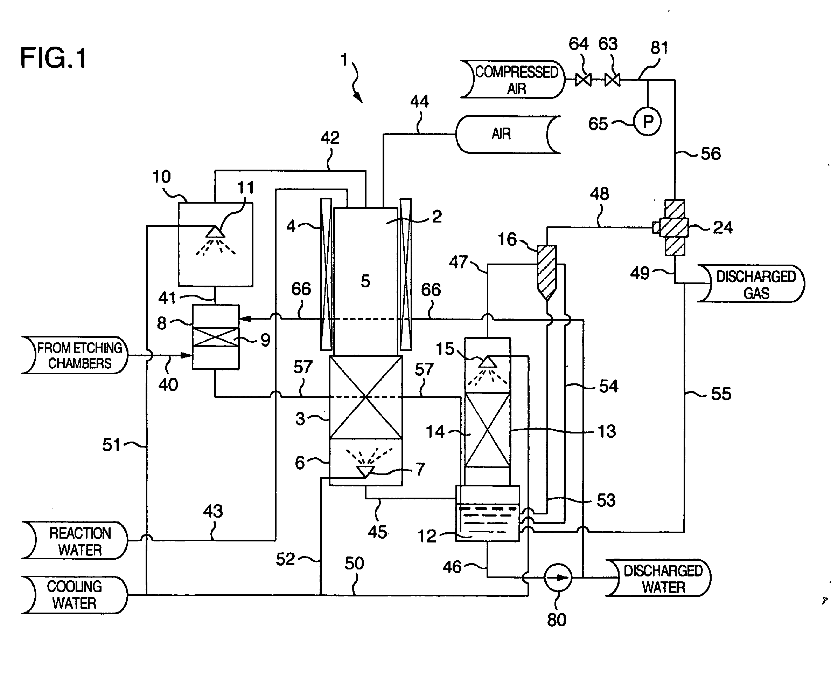

A PFC treating apparatus according to one preferable embodiment of the present invention will be described below, referring to Fig. 1.

The PFC treating apparatus 1 of this embodiment comprises a silicon removing apparatus, a reactor 2, a cooling chamber 6, a discharged water tank 12, a discharged gas washing column 13, a cyclone 16 and an ejector 24. The silicon removing apparatus comprises an inlet packed column 8 and a spray column 10. The inlet packed column 8 has a packed bed 9 packed with packings such as Raschig rings within it. The spray column 10 has a spray 11 within it. The piping 40 is connected to the space below the packed bed 9 in the inlet packed column 8. The space above the packed bed 9 in the inlet packed column 8 is connected to the spray column 10 through a piping 41. The reactor 2 comprises a catalyst cartridge 3 and a heating space 5 within it. The catalyst cartridge 3 has a catalyst bed packed with a catalyst within it. The catalyst for use in the catalyst bed is an alumina-based catalyst containg 80% Al₂O₃ and 20% NiO. The heating space 5 is provided upstream of the catalyst cartridge 3. A heater 4 is provided on the outside of the reactor 2 so as to surround the heating space 5. The cooling chamber 6 connected to the reactor 2 has a spray 7 within it and is positioned below the catalyst cartridge 3. A piping 42 connects the spray column 10 to the heating space 5. A piping 43 for feeding water (or steam) and a piping 44 for feeding air are each connected to the heating space 5.

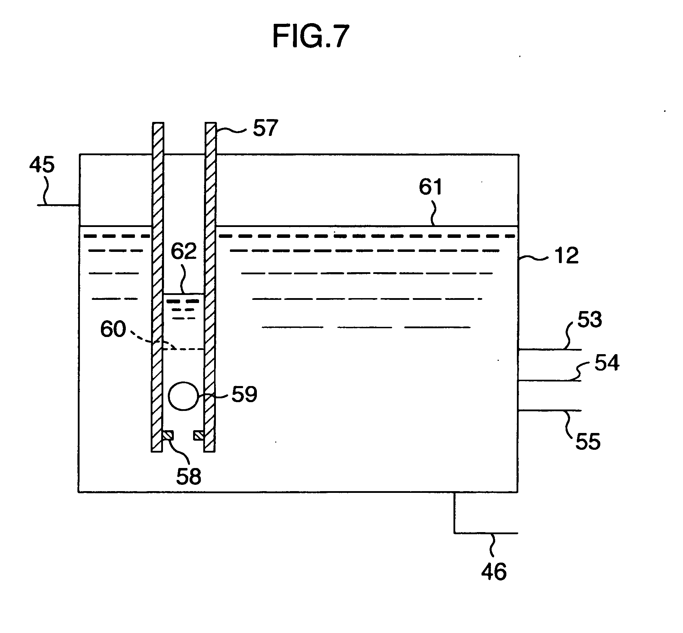

The discharged gas washing column 13 as an acid gas removing apparatus comprises a spray 15 at the upper position within it and a packed bed 14 packed with plastic Raschig rings below the spray 15. A discharged water tank 12 connected to the discharged gas washing column 13 is provided below the discharged gas washing column 13. The discharged water tank 12 is connected to the cooling chamber 6 through a piping 45. A piping 57 connected to the space below the packed bed 9 in the inlet packed column 8 is inserted into the discharged water tank 12 from the top side, as shown in Fig. 7. The piping 57 positioned in the discharged water tank 12 has a float seat 58 and a float 59 and a float stopper 60 for establishing a water seal structure. The annular float seat 58 is provided at the lower end of the inside wall of the piping 57. The float stopper 60 of a coarse wire net is provided at a position above the float seat 58 within the piping 57. In the piping 57, the float 59 is provided between the float seat 58 and the float stopper 60. A discharged water piping 46 with a discharged water pump 80 is connected to the bottom of the discharged water tank 12. A piping 66 is connected to the discharged water piping 46 at a position downstream of the discharged water pump 80 and is further connected to the space above the packed bed 9 in the inlet packed column 8. A piping 57 connected to the bottom of the inlet packed column 8, i.e. below the packed bed 9 in the inlet packed column 9, is inserted into the discharged water tank 12.

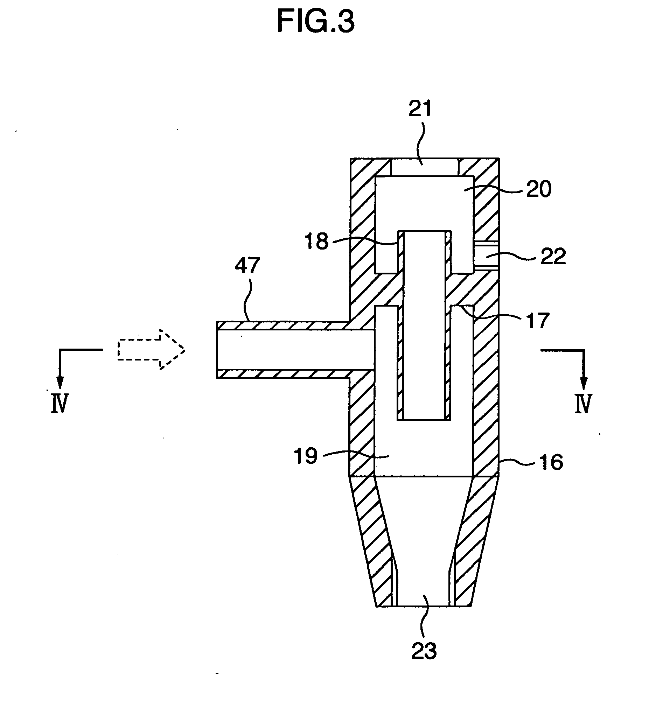

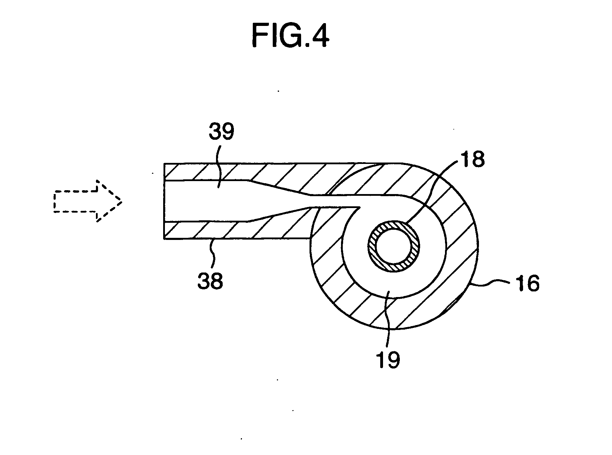

The structure of the cyclone 16 as a mist separator will be described below, referring to Figs. 3 and 4.

The cyclone 16 has a lower compartment 19 and an upper compartment 20, both being partitioned by a partition wall 17, within it. A discharged gas feed member 38 extends in the tangential direction to the inside wall of the lower compartment 19. The flow passage 39 in the discharged gas feed member 38 is tapered toward the lower compartment 19. A piping 47 connected to the top of the discharged gas washing column 13 is connected to the discharged gas feed member 38. The passage 18 penetrating through the partition wall 17 connects the lower compartment 19 to the upper compartment 20. The drain outlet 23 formed at the bottom of the lower compartment 19 is connected to a drain piping 53, which is connected to the dicharged water tank 12. The drain outlet 22 formed in the upper compartment 20 is connected to the discharged water tank 12 through a drain piping 54.

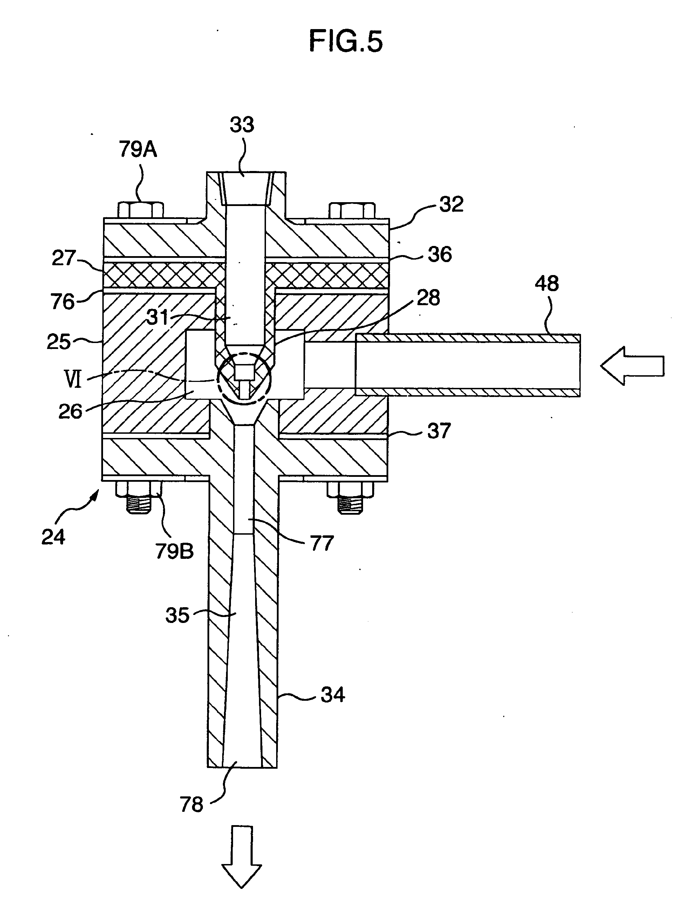

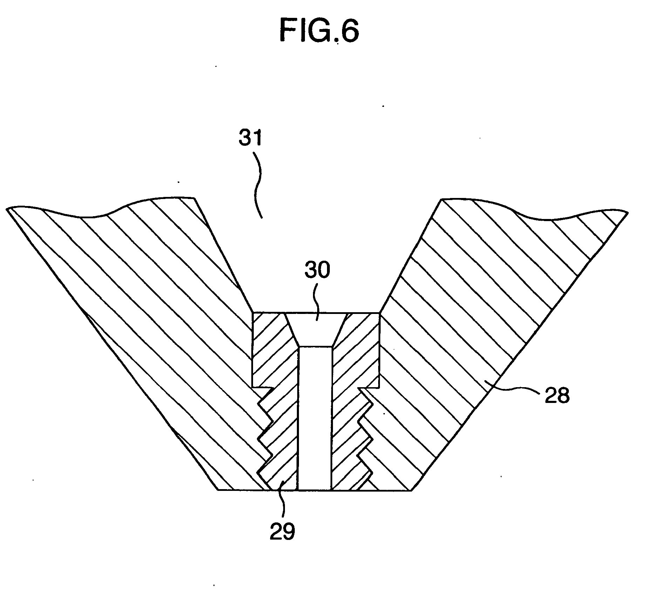

As shown in Fig. 5, the ejector 24 comprises an ejector body 25, an injection nozzle 27 and an ejection nozzle 34. The ejector body 25 has an internal space 26 within it. The injection nozzle 27 has a nozzle member 28. As shown in Fig. 6, the injection member 29 is screwed into the tip end part of the nozzle member 28. An injection orifice 30, about 2 mm in inner diameter, is formed in the injection member 29. The injection member 29 is made of highly corrosion-resistant and highly durable metal or ceramic. The ejection nozzle 34 has an ejection passage 35 within it. The injection nozzle 27 is provided against one end of the ejector body 25 through a packing 76. The tip end of the nozzle member 28 of the injection nozzle 27 is inserted into the ejector body 25 and is positioned in the internal space 26. The injection orifice 30 is connected to a flow passage 31 formed in the nozzle member 28 and to the internal spacing 26. The ejection nozzle 34 is provided against another end of the ejector body 25 through a packing 37. The ejection passage 35 of the ejection nozzle 34 is counterposed to the injection member 29 screwed in the nozzle member 28. The inlet of the ejection passage 35 is connected to the internal space 26.

The ejection passage 35 has a throat region 77 with a minimum passage cross-sectional area within it. The cross-sectional area of the ejection passage 35 increases from the throat region 77 toward the inlet and also from the throat region 77 toward the ejector outlet 78. The degree of the latter increase in the passage cross-sectional area is smaller than the degree of the former increase. A pressing plate 32 with a flow inlet 33 is counterposed to the injection nozzle 27 through the packing 36. The pressing plate 32, the injection nozzle 27, the ejector body 25 and the ejection nozzle 34 are arranged in this order and are secured by bolts 79A and nuts 79B. Other members than the pressing plate 32 and the injection member 29 of the injection nozzle 27, e.g. the ejector body 25 and the ejection nozzle 34, are made of highly corrosion-resistant plastic, for example of vinyl chloride resin (or fluororesin, etc.).

A piping 48 provided on the ejector body 25 is connected to the discharge outlet 21 formed at the top of the upper compartment 20 of the cyclone 16. The piping 48 is also connected to the internal space in the ejector body 25. The piping 49, connected to the discharged gas duct 75, is connected to the ejector outlet 78 of the ejection nozzle 34. A condensate drain piping 55 connected to piping 49 is connected to the discharged water tank 12. A water feed pipe 50 is connected to the spray 15. A water feed pipe 51 is connected to the spray 11. A water feed pipe 52 connected to the spray 7. The water feed pipes 51 and 52 are connected to the water feed pipe 50.

A compressed air feeder 81 is fixed to the pressing plate 32. As shown in Fig. 1, the compressed air feeder 81 comprises an air feed pipe 56, a pressure central valve 63 and an air feed valve 64. The air feed pipe 56 is connected to the pressing plate 32 and communicates with the flow inlet 33. A pressure control valve 63 is provided in the air feed pipe 56, where an air feed valve 64 is provided in the air feed pipe 56 at a position upstream of the pressure control valve 63. The air feed pipe 56 is connected to a compressor, though not shown in the drawings. Numeral 65 is a pressure switch (P) for safety interlock.

PFC treatment in the PFC treating apparatus 1 of this embodiment will be described below.

PFC contained in the discharged gas to be fed to the PFC treating apparatus depends on the kinds of semiconductors produced in semiconductor production apparatuses or semiconductor plants. The production of wafers as a basis material for semiconductors involves cases of using a single PFC and a plurality of PFCs. In this embodiment, the case of using SF₆ and C₂F₆ as PFC in the semiconductor production is explained.

Discharged gas containing SF₆ and C₂F₆ as PFC, SiF₄ and HF from etching chambers 68, 69, 71 and 72 is fed to the inlet packed column 8 of a silicon removing apparatus through the piping 40 by driving vacuum pumps 73A, 73B, 73C and 73D. The discharged gas ascends through the packed bed 9 and is led to the spray column 10 of the silicon removing apparatus through the piping 41. Fresh water fed through the water feed pipe 51 is fed into the spray column 10 through the spray 11. The sprayed water is discharged into the piping 41 and led to the inlet packed column 8. Discharged water in the discharged water tank 12 is fed to the inlet packed column 8 through the discharged water piping 46 and piping 66 by driving the discharged water pump 80. The discharged water and the sprayed water descend through the packed bed 9.

SiF₄ contained in the discharged gas undergoes reaction of the following reaction equation (4) through contact with water (discharged water and water sprayed in spray column 10) in the inlet packed column 8 and is decomposed to SiO₂ and HF:

SiF₄ + 2H₂O → SiO₂ + 4HF (4)

HF contained in the discharged gas fed to the inlet packed column 8 and HF formed by the reaction of the reaction equation (4) are absorbed into water in the inlet packed column 8 and removed from the discharged gas. SiO₂ as a solid is also washed away by the washing water. The packed bed 9 acts to increase the contact efficiency between the ascending discharged gas and the descending washing water and increase the reaction efficiency of the reaction equation (4) and the absorption efficiency of HF into water. Water containing SiO₂ and absorbed HF is led to the discharged water tank 12 below the inlet packed column 8 through the piping 57. Other impurities contained in the discharged gas are also removed by water in the inlet packed column 8 and the spray column 10.

HF not absorbed into water in the inlet packed column 8 is led to the spray column 10 together with the discharged gas and absorbed into sprayed water there. SiF₄ remaining in the discharged gas led to the spray column 10 from the inlet packed column 8 undergoes the reaction of reaction equation (4) through contact with the sprayed water in the spray column 10. HF generated from the reaction is absorbed into the sprayed water. Generated SiO₂ is also washed away by the sprayed water and discharged into the inlet packed column 8 and piping 57.

The discharged gas containing SF₆ and C₂F₆ discharged into the piping 42 from the spray column 10 is fed to the heated space 5 of the reactor 2 at a flow rate of 60 l/min. The discharged gas contains neither HF nor SiF₄ nor SiO₂ formed by the reaction of the reaction equation (1). Water (or steam) is fed through the piping 43 to the heated space 5, and air is fed thereto thereto through the piping 44. The decomposition reaction of PFC by a catalytic action is hydrolysis, and thus the necessary water (or steam) for the reaction is fed thereto. The discharged gas is heated, together with the water and the air, to a temperature of 750°C, at which decomposition of SF₆ and C₂F₆ by the catalytic action starts, by the heater 4. Depending on the kind of PFC, the heating temperature is about 650 to about 750°C. Water turns to steam. The discharged gas containing steam, air, SF₆ and C₂F₆ heated to 750° C is fed to the catalyst cartridge 3.

The reaction of the above-mentioned reaction equation (2) and the reaction of the following reaction equation (5) of SF₆ and C₂F₆ with H₂O are promoted by the action of an alumina-based catalyst in the catalyst cartridge 3 to decompose SF₆ to SO₃ and HF and C₂F₆ to CO₂ and HF:

SF₆ + 3H₂O →SO₃ + 6HF (2)

C₂F₆ + 3H₂O + air (O₂) → 2CO₂ + 6HF (5)

The reactions of the reaction equations (2) and (5) take place in the presence of steam. SF₆ and C₂F₆ are 100% decomposed. In the case that air, particularly oxygen, is not fed to the catalyst cartridge 3, harmful CO is formed by reaction of C₂F₆ with H₂O. When air is fed thereto, the oxygen contained in the air converts CO to harmless CO₂, and thus no CO is generated as shown by the reaction equation (5). Oxygen may be fed thereto in place of air.

By use of a catalyst comprising 80% Al₂O₃ and 20% NiO, SF₆ and C₂F₆ are 100% decomposed in the catalyst cartridge 3 at 750°C. Besides the catalyst comprising 80% Al₂O₃ and 20% NiO, such kinds of catalysts as disclosed in sections "Means for solving the Problem" and "Modes of Embodiments of the Invention" of JP-A-11-70322 (catalysts containing an Al oxide and at least one oxide of a metal selected from Zn, Ni, Ti, Fe, Sn, Co, Zr, Ce, Si and Pt) can decompose PFC.

In this embodiment, since silicon contained in the form of such compounds as SiF₄, etc. in the discharged gas can be removed by carrying out the reaction of the reaction equation (4) in the silicon removing apparatus, the efficiency of the catalytic decomposition of PFC can be increased. When the discharged gas containing silicon is fed to the reactor 2, the reaction of the reaction equation (4) takes place in the heated space 5 by water (or steam) fed through the piping 43, and the generated SiO₂ is led to the catalyst cartridge 3. In that case, there are the following problems ① and ②. ① :The resulting SiO₂ plugs pores formed in the catalyst. ②: The resulting SiO₂ plugs clearances formed between catalysts. The catalyst surface area is reduced by ① and ②, lowering the PFC decomposition reaction rate. The discharged gas flow through clearances between the catalysts is deteriorated due to ②, inhibiting the contact of the discharged gas with the catalyst, resulting in a decrease of the PFC decomposition reaction rate. In this embodiment, SiO₂ is removed in advance in the silicon removing apparatus, and thus the PFC decomposition efficiency can be improved without said problems.

Discharged gas containing SO₃, CO₂ and HF as decomposition gases of SF₆ and C₂F₆ is fed to the cooling chamber 6 from the catalyst cartridge 3. Water fed through the water feed pipe 52 is sprayed from the spray 7 into the cooling chamber 6. The discharged gas is cooled through contact with the sprayed water, so the discharged gas temperature is lowered to 100°C or lower, whereby apparatuses at the positions downstream of the reactor 2 (cooling chamber 6, discharged gas washing column 13, cyclone 16 and ejector 24) and pipings connecting one apparatus to another (pipings 45, 47, 48 and 49, discharged water piping 46, drain pipings 53 and 54 and condensate drain piping 55) can be made of vinyl chloride resin (or fluoro-resin, etc.) as highly corrosion-resistant plastics. Pipings 57 and 66 can be also made of vinyl chloride resin.

A portion of HF contained in the discharged gas is absorbed into the sprayed water. The sprayed water and the discharged gas are led to the space above the liquid level 61 in the discharged water tank 12 from the cooling chamber 6 through the piping 45 (see Fig. 7). Discharged water is stored in discharged water tank 12 temporarily. By driving the discharged water pump 80, the water in discharged water tank 12 is discharged into the discharged water piping 46 to a discharged water treatment plant (not shown in the drawing) near the PFC treating apparatus.

As shown in Fig. 7, when the water discharged from the inlet packed column 8 passes through the piping 57, the float 59 is in a floating state above the float seat 58 in the piping 57 in the discharged water tank 12, and thus, the water passes through the float stopper 60 and float seat 58, and further passes at the open end of the piping 57 and is fed to the discharged water tank 12. The float 59 is inhibited from further upward movement by the float stopper 60. The discharged gas, when happens to flow into the piping 57 at the inlet packed column 8, passes through the piping 57 to reach the part of the piping 57 that is in the discharged water tank 12. At the position near the open end of the piping 57, the water is pushed out of the piping 57 by the discharged gas to establish a discharged gas atmosphere. The float 59 fails to maintain floating in the piping 57 in such a discharged gas atmosphere and falls onto the float seat 58 to close the open end. Thus, the flow of the discharged gas from the inlet packed column 8 into the piping 57 is stopped.

Such a discharged gas containing decomposition gases is led to the discharged gas washing column 13 from the discharged water tank 12. Water fed through the water feed pipe 50 is sprayed by the spray 15. The sprayed water descends through the packed bed 14 to fall into the discharged water tank 12. The discharged gas ascends through the packed bed 14. SO₃ and HF as acid gases contained in the discharged gas are absorbed into the sprayed water and separated from the discharged gas. However, a small amount of acid gases and acid gas mists (SO₃ mists) containing moisture are discharged into the piping 47 from the discharged gas washing column 13 and fed to the flow passage 39 in the discharged gas feed member 38 of the cyclone 16. An aqueous alkaline solution (aqueous NaOH solution or aqueous KOH solution) may be sprayed by the spray 15 in place of water.

The discharged gas is fed to the lower compartment 19 of the cyclone 16 through the flow passage 39 and descends while whirling around the passage 18. Acid gas mists contained in the discharged gas are separated from the discharged gas by whirling of the discharged gas and blown off outwardly to attach to the side walls of the lower compartment 19. The attached mists flow down along the side walls toward the bottom of the lower compartment 19. The separated acid gas mists are discharged into the discharged water tank 12 from the drain outlet 23 through the drain piping 53. The whirling stream of the discharged gas in the lower compartment 19 ascends through the passage 18, while whirling, and reaches the upper compartment 20. Since the discharged gas is still in a whirling state even in the upper compartment 20, the acid gas mists entrained in the discharged gas are separated from the discharged gas and flow downward along the side walls of the upper compartment 20. The separated acid mists are discharged into the discharged water tank 12 through the drain outlet 22 and the drain piping 54.

The discharged gas with considerably reduced content of acid gas mists is discharged into the piping 48 from the discharge outlet 21 and then led to the ejector 24.

Compressed air, which is compressed by a compressor (not shown in the drawings), is fed to the ejector 24 through an air feed pipe 56 by opening the air feed valve 64. The compressed air is a driving gas for the ejector 24. The pressure of the compressed air is controlled to a set pressure by adjusting the opening degree of the pressure control valve 63. The compressed air is fed to the ejector 24 at substantially the same flow rate as that of the discharged gas to be fed to the reactor 2, i.e. at about 60 to about 80 l/min and at a pressure of about 0.1 MPa. N₂ gas or He gas may be used as a driving gas in place of the compressed air.

In Figs. 5 and 6, the compressed air is fed to the flow passage 31 of the nozzle member 28 from the flow inlet 33 and injected from the injection orifice 30 toward the ejection passage 35 of the ejection nozzle 34 at a sonic or supersonic speed. The injection stream of compressed air from the injection orifice 30 generates a negative pressure in the throat region 77 or its neighborhood of the ejection passage 35. By the action of the negative pressure, the discharged gas in the piping 48 is sucked into the ejection passage 35 through the internal space 26 and discharged into the piping 49. The discharged gas is led to the discharged gas duct 75 through the piping 49 (Fig. 2). Condensate contained in the discharged gas from the ejector 24 is led to the discharged water tank 12 through the condensate drain piping 55. By the sucking action of the ejector 24 on the discharged gas, the cooling chamber 6, the discharged water tank 12 and the discharged gas washing column 13 are kept in a negative pressure state to prevent SO₃, HF, etc. contained in the discharged gas from leakage to the outside.

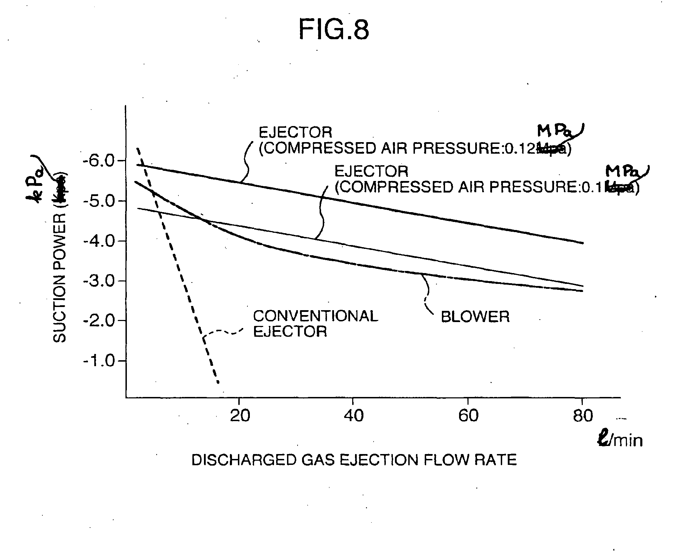

Generally, the conventional ejector has been used to generate a high vacuum state. Thus, the conventional ejector cannot provide such a higher suction gas rate than that of blowers and thus fails to serve as a substitute for blowers. In the conventional ejector, the ejector suction power largely depends on the pressure of the driving compressed air and is abruptly lowered with increasing ejection flow rate of the gas to be sucked, as shown in Fig. 8 by the dotted line. It is impossible to use an ejector generally used for generating a vacuum state (generation of suction power) as a substitute for a blower because of too large differences in the characteristics therebetween.

On the other hand, the ejector 24 used in this embodiment has such ejection characteristics as shown in Fig. 8 by the full line. Even if the ejection flow rate of the discharged gas from the ejector 24 is increased, the degree of lowering of the suction power of the ejector 24 can be kept small. The ejector 24 has been developed by the present inventors. The ejector 24 has substantially equivalent ejection characteristics to those of the blower (as shown in Fig. 8 by the dot and dash line). Even if the pressure of the driving compressed air to be fed to the ejector 24 is changed to e.g. 0.1 MPa and 0.12 MPa, respectively, the degree of lowering of the suction power is substantially not changed against the increasing ejection flow rate of discharged gas. Thus, the ejector 24 can have a large ejection flow rate of discharged gas.

Furthermore, as characteristics of the ejector 24, the discharged gas suction power increases proportionally to increasing pressure of driving compressed air. There would be a risk of damaging the ejector 24 due to higher vacuum established when the pressure of compressed air to the ejector 24 exceeds the set pressure as a result of disorder in the pressure control valve 63. The pressure switch 65 detects the pressure in the air feed pipe 56 at the position downstream of the pressure control valve 63 to close the air feed valve 64 when the pressure exceeds the set pressure and stops the compresser (not shown in the drawings).

The discharged gas led to the ejector 24 contains a small amount of acid gas mists, but since the ejector 24 is made of a highly corrosion-resistant plastic, there is no fear of corrosion, even if it is brought into contact with the acid gas mists. In this embodiment any corrosion due to decomposition gas does not take place in the ejector 24 as a decomposition gas-containing discharged gas ejecting apparatus, and thus, maintenance working such as inspection, part replacement, etc. of the discharged gas ejecting apparatus (apparatus for injecting a gas to such another gas) is substantially not required. That is, the frequency of maintenance inspection is considerably lower than in the case of using a blower, and the continuous operation rate of the PFC treating apparatus 1 is considerably improved. Since the injection member 29 with the injection orifice 30 for ejecting the discharged gas at a sonic or supersonic speed is made of a highly corrosion-resistant, highly durable ceramic, wearing due to sonic speed-discharged gas is considerably less, contributing to lowering of the frequency of maintenance inspection of the ejector 24. Thus, the ejector 24 can fully perform continuous long-term operation.

The use of the cyclone 16 as a mist separating apparatus reduces the amount of acid gas mists to the discharged gas duct 75 through the ejector 24. Thus, the amount of mists condensed in the discharged gas duct 75 can be reduced, considerably reducing corrosion of the discharged gas duct 75. The reduction in the amount of mists results in a further prolongation of the life of the ejector 24.

The discharged water tank 12 is at the lowest position and thus the water discharged from the inlet packed column 8 and the spray column 10, sprayed water from the cooling chamber 6 and the discharged gas washing column 13 and drain water separated in the cyclone 16 flow into the discharged water tank 12 by gravity. Thus, pumps for transferring these kinds of water to the discharged water tank 12 are not required, thereby making the structure of the PFC treating apparatus 1 more compact.

The PFC treating apparatus 1 of this embodiment can decompose also any other PFC than SF₆ and C₂F₆.

An SF₆ decomposition treatment test was carried out in the PFC treating apparatus 1 shown in Fig. 1, using a simulation gas containing SF₆. The simulation gas was prepared by diluting SF₆ with nitrogen gas to contain 0.5% SF₆. The simulation gas was fed to the reactor 2 of the PFC treating apparatus 1 at a flow rate of 60 l/min. Air and water were also fed to the reactor 2 at 15 l/min. and 20 ml/min, respectively. The simulation gas containing water and air was heated to 750°C by an electric heater in the heating space 5. Then, the simulation gas was fed to the catalyst cartridge 3 and decomposed. The catalyst packed in the catalyst cartridge 3 was a NiO and Al₂O₃-containing catalyst.

SF₆ was treated at a space velocity of the simulation gas to the catalyst of 1,000/h. Gas containing SF₆ decomposition gas discharged from the reactor 2 was cooled in the cooling chamber 6 and then led to the cyclone 16 at a flow velocity of about 20 m/s through the discharged gas washing column 14. Acid gas mists separated and removed by the cyclone 16 were discharged into the dicharged water tank 12 from the bottom of the cyclone 16 through the drain piping 53. Gas discharged from the cyclone 16 was sucked by the ejector 24 driven by compressed air at 0.1 MPa. The flow rate of compressed air to the ejector 24 was about 70 l/min. The SO₃ concentration of the gas at a position upstream of the cyclone 16 (in piping 47) and at a position downstream thereof (in piping 48) was measured to determine the mist removal efficiency of the cyclone 16. Since SO₃ mists are formed by absorption of water molecules around SO₃ as nuclei, the mist removal efficiency of the cyclone 16 can be calculated by the ratio of the SO₃ concentration in the piping 48 to that in the piping 47. The SO₃ concentration was calculated by subtracting the gaschromatographically measured SO₂ concentration from the SOx concentration measured by a liquid trapping method. As a result, the SO₃ concentration was 1,400 ppm at the position upstream of the cyclone 16, whereas it was 280 ppm after the cyclone 16. That is, 80% of the mists were removed by the cyclone 16.

The mist particle size distribution was measured at the outlet of the cyclone 16. Mists contained in the gas discharged from the cyclone 16 had particle sizes substantially smaller than 1 µm. Mists having particle sizes of 1 µm or more were removed by the cyclone 16. After the treating operation for a predetermined time, the ejector 24 was dismantled, and it was found by inspection that no corrosion took place at the interior of the ejector 24, and no condensate was observed in the piping 49 at the outlet side of the ejector 24.

In place of the aforementioned SF₆-containing simulation gas, a NF₃-containing simulation gas was used to conduct the same test as in the case of using the SF₆-containing simulation gas. Nitric acid mists were smaller in particle size than sulfuric acid mists, and accordingly, the removal efficiency of the mist removing apparatus was as low as 20-30%, but no corrosion, etc. were found to take place in the ejector as in the test with the SF₆-containing simulation gas.

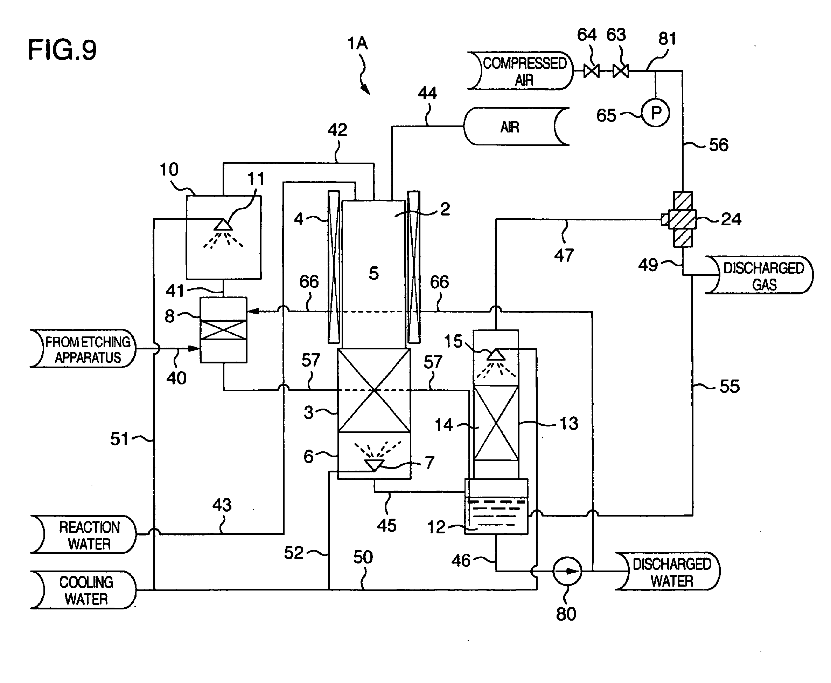

A PFC treating apparatus 1A not forming part of the present invention will be described below, referring to Fig. 9, where the same members as in the embodiment of Fig. 1 are identified by the same reference numerals. The PFC treating apparatus 1A is different from the PFC treating apparatus 1 of the invention only in the omission of the cyclone 16 of Fig. 1. Accordingly, the piping 47 connects the top of the discharged gas washing column 13 directly to the internal space 26 of the ejector 24. In this apparatus, the discharged gas from the discharged gas washing column 13 is sucked into the piping 47 by the suction of the ejector 24 and discharged into the piping 49.

In this apparatus, the structure is more simplified than the PFC treating apparatus 1 due to the omission of the cyclone 16. This apparatus may preferably be applied to the case that the concentration of PFC to the PFC treating apparatus 1A is low, and the amount of acid gas mists entrained in the discharged gas from the discharged gas washing column 13 is small.

When the concentration of PFC fed to the PFC treating apparatus is low, the discharged gas washing column 13 may be omitted in the embodiment of Fig. 1; in such an apparatus not forming part of the present invention, the piping 47 connected to the cyclone 16 is connected directly to the space above the liquid level 61 in the discharged water tank 12.

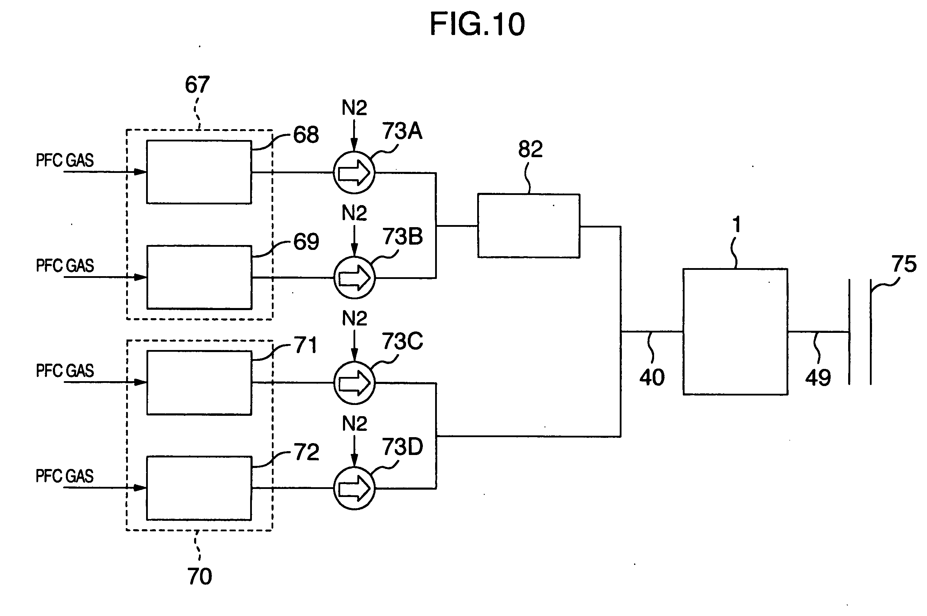

In semiconductor production plants, wafers with metallic wirings are etched in some cases, For example, in the semiconductor production plant shown in Fig. 10, wafers with metallic wirings are etched in etching chambers 68 and 69 of the etching apparatus 67. A large amount of attachable by-products originating from the metallic wirings are generated by the etching. Residual PFC containing the by-products, HF and SiF₆, are discharged from the etching chambers 68 and 69 and fed, together with N₂ gas fed to vacuum pumps 73A and 73B, to a pretreating apparatus 82 packed with activated carbon. The attachable by-products are removed by the pretreating apparatus 82. The discharged gas from the pretreating apparatus 82 is led to the PFC treating apparatus 1 through the piping 40. By removing the attachable by-products by the pretreating apparatus 82 in this manner, PFC can be efficiently decomposed by the catalyst cartridge 3.

In some cases, a chlorine gas, a hydrogen chloride gas or hydrogen bromide (HBr) gas is used as etching gas besides the PFC gas, where the chlorine gas, the hydrogen chloride gas or the hydrogen bromide gas is mixed with the PFC gas and fed to the etching chambers. Depending on the etching treatment, the chlorine gas, the hydrogen chloride gas or the hydrogen bromide gas is fed to the etching chambers after the etching by the PFC gas has been finished. Depending on the case, the etching treatment by the chlorine gas, the hydrogen chloride gas or the hydrogen bromide gas is carried out before the etching treatment by the PFC gas, where the feeding of the chlorine gas, the hydrogen chloride gas or the hydrogen bromide gas to the etching chambers is carried out before the feeding of the PFC gas. The chlorine gas, the hydrogen chloride gas and the hydrogen bromide gas are also acid gases as HF.

The case of feeding a chlorine gas and a PFC gas to etching chambers will be described below. Discharged gas containing chlorine gas and PFC gas discharged from the etching chambers and the N₂ gas from the vacuum pumps is fed to the PFC treating apparatus 1 as shown in Fig. 1 through the piping 40. The decomposition treatment of PFC in the PFC treating apparatus 1 is carried out in the same manner as described for the embodiment of Fig. 1. The behavior of the chlorine gas in the PFC treating apparatus 1 will be described below.

A simulation gas containing N₂ and 1% Cl₂ was fed to the PFC treating apparatus 1. The Cl₂ gas was passed through the inlet packed column 8 and spray column 10 to reach the reactor 2 through the piping 42. The catalyst temperature was 750°C (simulation gas flow rate: 60 l/min). The Cl₂ gas was substantially not removed in the inlet packed column 8 and the spray column 10. Air and reaction water were fed to the reactor 2 at 10 l/min and 15 ml/min, respectively. The Cl₂ gas is oxidized by the catalyst in the catalyst cartridge 3 to turn it to an HCl gas by the reaction shown by the following reaction equation (6) :

2Cl₂ + 2H₂O→2HCl + O₂ (6).

The HCl gas is easily soluble in water and thus was absorbed into sprayed water in the discharged gas washing column 13 and removed from the simulation gas. The simulation gas was discharged from discharged gas washing column 13 at a Cl₂ concentration of 100 ppm. That is, 99% of Cl₂ were removed thereby. No HCl was detected in the discharged simulation gas. No corrosion by the Cl₂ gas was found on the ejector 24.

## Claims

1. Method for treating perfluorocompounds contained in a gas, comprising the following steps:
(A) decomposing the perfluorocompounds contained in the gas to a gas containing acid gases,
(B) removing the acid gases from the gas discharged from step (A) by gas washing with water or an aqueous alkaline solution in a gas washing column (13) comprising a spray (15) and a discharged water tank (12), and (C) separating acidic mist contained in the gas discharged from the gas washing column (13),
wherein the gas washing column (13) and the discharged water tank (12) are kept under a negative pressure by sucking the gas discharged from the gas washing column (13) through a piping (47) connected to the top of the gas washing column (13) and a piping (48) by means of ejector (24),
**characterized in that**
- in step (C), mists are separated by means of a cyclone (16) comprising an upper compartment (20) and a lower compartment (19), the feed member (38) thereof being connected through the piping (47) to the top of the gas washing column (13), and the gas discarge outlet (21) thereof being connected through the piping (48) to the ejector (24),
- wherein
• the mist separated from the gas and discharged from the drain outlet (23) of the cyclone (16) provided in the bottom of the lower compartment (19) thereof is discharged through a discharge piping (53) into the tank (12), and
• the cyclone (16) used comprises a further drain outlet (22) provided in the upper compartment (20) where mists entrained in the discharged gas are separated and discharged through the further drain outlet (22) and a drain piping (54) into the tank (12).

2. Method according to claim 1, **characterized in that** condensate contained in gas discharged from the ejector (24) is led through a condensate drain piping (55) to the tank (12).

3. Method according to claim 1 or 2, **characterized in that** the perfluorocompounds are catalytically decomposed in step (A).

4. Method according to any of claims 1 to 3, **characterized in that** the perfluorocompounds are comprised in a gas discharged from a semiconductor plant.

5. Apparatus (1) for treating perfluorocompounds contained in a gas fed thereto, which comprises:
- a perfluorocompounds decomposing apparatus (2, 3) for decomposing the perfluorocompounds contained in the gas,
- an gas washing column (13) for removing acid gases from the gas resulting from the decomposition of the perfluorocompounds in the perfluorocompounds decomposing apparatus (2, 3) by means of a spray (15) of water or an aqueous alkaline solution,
- a tank (12) provided below the gas washing column (13) for receiving the water or the aqueous alkaline solution used for gas washing,
- a mist separation means (16) provided downstream of the spray (15), and
- an ejector (24) for keeping the gas washing column (13) and the tank (12) under a negative pressure by sucking the gas discharged from the gas washing column (13) through a piping (47) connected to the top of the gas washing column (13) and a piping (48),
**characterized in that**
- the mist separation means are a cyclone (16) comprising an upper compartment (20) and a lower compartment (19), the feed member (38) thereof being connected through the piping (47) to the top of the gas washing column (13) and the gas discharge outlet (21) thereof being connected through the piping (48) to the ejector (24),
- wherein
• the drain outlet (23) of the cyclone (16) provided in the bottom of the lower compartment thereof is connected through a discharge piping (53) to the tank (12), and
• the cyclone (16) comprises a further drain outlet (22) provided in the upper compartment (20) for discharging mists entrained in the discharged gas and separated in the upper compartment (20), the further drain outlet (22) being connected through a drain piping (54) to the tank (12).

6. Apparatus according to claim 5, **characterized in that** the ejector (24) is connected to a discharged gas duct (75) through a piping (49) connected to a condensate drain piping (55) connected to the tank (12) for leading condensate contained in the gas discharged from the ejector (24) to the tank (12).

7. Apparatus according to claim 5 or 6, **characterized in that** the perfluorocompounds decomposing apparatus (2, 3) is a reactor (2) comprising a packed catalyst (3) and a heater (4) for the thermal catalytic decomposition of the perfluorocompounds.

8. Apparatus according to claim 7, **characterized in that** the catalyst contains an Al oxide and further one oxide of a metal selected from Zn, Ni, Ti, Fe, Sn, Co, Zr, Ce, Si and Pt.

9. Apparatus according to any of claims 5 to 8, **characterized in that** means for stopping the feeding of driving gas to the ejector (24), when the pressure of the driving gas to the ejector (24) exceeds a set pressure, are provided.

## Patentansprüche

1. Verfahren zur Behandlung von in einem Gas enthaltenen Perfluorverbindungen, mit den folgenden Schritten:
(A) Zerlegen der in dem Gas enthaltenen Perfluorverbindungen in ein Sauergase enthaltendes Gas,
(B) Entfernen der Sauergase aus dem aus Schritt (A) abgegebenen Gas durch Gaswaschen mit Wasser oder einer wässrigen Alkalilösung in einem Gaswaschturm (13), der einen Sprühnebel (15) und einen Abgabewassertank (12) umfasst, und
(C) Abtrennen des säurehaltigen Nebels, der in dem aus dem Gaswaschturm (13) abgegebenen Gas enthalten ist,
wobei der Gaswaschturm (13) und der Abgabewassertank (12) durch Absaugen des aus dem Gaswaschturm (13) abgegebenen Gases durch ein Rohrleitungssystem (47), das mit dem oberen Ende des Gaswaschturms (13) verbunden ist, und ein Rohrleitungssystem (48) mittels einer Ausstoßvorrichtung (24) unter negativen Druck gehalten werden,
**dadurch gekennzeichnet, dass**
- in Schritt (C) mittels eines Zyklons (16), der eine obere Kammer (20) und eine untere Kammer (19) umfasst, Nebel abgetrennt werden, wobei dessen Einspeisungselement (38) durch das Rohrleitungssystem (47) mit dem oberen Ende des Gaswaschturms (13) verbunden ist und dessen Gasabgabeöffnung (21) durch das Rohrleitungssystem (48) mit der Ausstoßvorrichtung (24) verbunden ist,
- wobei
• der Nebel, der von dem Gas abgetrennt und aus der Ausflussöffnung (23) des Zyklons (16) abgegeben wurde, die im Boden von dessen unterer Kammer (19) vorgesehen ist, durch ein Abgaberohrleitungssystem (53) in den Tank (12) abgegeben wird, und
• der verwendete Zyklon (16) eine weitere Ausflussöffnung (22) umfasst, die in der oberen Kammer (20) vorgesehen ist, wo in dem abgegebenen Gas mitgeführte Nebel abgetrennt und durch die weitere Ausflussöffnung (22) und ein Ausflussrohrleitungssystem (54) in den Tank (12) abgegeben werden.

2. Verfahren nach Anspruch 1, **dadurch gekennzeichnet, dass** Kondensat, das in dem Gas enthalten ist, welches aus der Ausstoßvorrichtung (24) abgegeben wird, durch ein Kondensatausflussrohrleitungssystem (55) zum Tank (12) geführt wird.

3. Verfahren nach Anspruch 1 oder 2, **dadurch gekennzeichnet, dass** die Perfluorverbindungen in Schritt (A) katalytisch zerlegt werden.

4. Verfahren nach irgendeinem der Ansprüche 1 bis 3, **dadurch gekennzeichnet, dass** die Perfluorverbindungen in einem Gas enthalten sind, das von einer Halbleiteranlage abgegeben wird.

5. Vorrichtung (1) zur Behandlung von Perfluorverbindungen, die in einem in sie eingespeisten Gas enthalten sind, mit:
- einer Perfluorverbindungen zerlegenden Vorrichtung (2, 3) zum Zerlegen der in dem Gas enthaltenen Perfluorverbindungen,
- einem Gaswaschturm (13) zum Entfernen von Sauergasen aus dem Gas, die aus der Zerlegung der Perfluorverbindungen in der Perfluorverbindungen zerlegenden Vorrichtung (2, 3) stammen, mittels eines Sprühnebels (15) aus Wasser oder einer wässrigen Alkalilösung,
- einem unter dem Gaswaschturm (13) vorgesehenen Tank (12) zum Aufnehmen des Wassers oder der wässrigen Alkalilösung, das/die zum Gaswaschen verwendet wird,
- einer Nebelabtrenneinrichtung (16), die stromabwärts des Sprühnebels (15) vorgesehen ist,
und
einer Ausstoßvorrichtung (25) zum Halten des Gaswaschturms (13) und des Tanks (12) unter negativem Druck durch Absaugen des aus dem Gaswaschturm (13) abgegebenen Gases durch ein Rohrleitungssystem (47), das mit dem oberen Ende des Gaswaschturms (13) verbunden ist,
und ein Rohrleitungssystem (48),
**dadurch gekennzeichnet, dass**
- die Nebelabtrenneinrichtungen ein Zyklon (16) sind, der eine obere Kammer (20) und eine untere Kammer (19) umfasst, wobei dessen Einspeisungselement (38) durch das Rohrleitungssystem (47) mit dem oberen Ende des Gaswaschturms (13) verbunden ist und dessen Gasabgabeöffnung (21) durch das Rohrleitungssystem (48) mit der Ausstoßvorrichtung (24) verbunden ist,
- wobei
• die Ausflussöffnung (23) des Zyklons (16), die im Boden von dessen unterer Kammer (19) vorgesehen ist, durch ein Abgaberohrleitungssystem (53) mit dem Tank (12) verbunden ist, und
• der Zyklon (16) eine weitere Ausflussöffnung (22) umfasst, die in der oberen Kammer (20) vorgesehen ist, um Nebel, die in dem abgegebenen Gas mitgeführt und in der oberen Kammer (20) abgetrennt werden, abzugeben, wobei die weitere Ausflussöffnung (22) durch ein Ausflussrohrleitungssystem (54) mit dem Tank (12) verbunden ist.

6. Vorrichtung nach Anspruch 5, **dadurch gekennzeichnet, dass** die Ausstoßvorrichtung (24) mit einer Abgabegasleitung (75) durch ein Rohrleitungssystem (49) verbunden ist, das mit einem Kondensatausflussrohrleitungssystem (55) verbunden ist, welches mit dem Tank (12) verbunden ist, um Kondensat, das in dem aus der Ausstoßvorrichtung (24) abgegebenen Gas enthalten ist, zum Tank (12) zu führen.

7. Vorrichtung nach Anspruch 5 oder 6, **dadurch gekennzeichnet, dass** die Perfluorverbindungen zerlegende Vorrichtung (2, 3) ein Reaktor (2) ist, der einen gepackten Katalysator (3) und eine Heizvorrichtung (4) für die thermische katalytische Zerlegung der Perfluorverbindungen umfasst.

8. Vorrichtung nach Anspruch 7, **dadurch gekennzeichnet, dass** der Katalysator ein Aluminiumoxid und weiterhin ein Oxid eines Metalls enthält, das aus Zn, Ni, Ti, Fe, Sn, Co, Zr, Ce, Si und Pt ausgewählt ist.

9. Vorrichtung nach irgendeinem der Ansprüche 5 bis 8, **dadurch gekennzeichnet, dass** Einrichtungen zum Stoppen der Einspeisung von Antriebsgas in die Ausstoßvorrichtung (24), wenn der Druck des Antriebsgases zur Ausstoßvorrichtung (24) einen eingestellten Druck überschreitet, vorgesehen sind.

## Revendications

1. Procédé pour traiter des composés perfluorés contenus dans un gaz, comportant les étapes suivantes consistant à :
(A) décomposer les composés perfluorés contenus dans le gaz en un gaz contenant des gaz acides,
(B) extraire les gaz acides du gaz évacué de l'étape (A) par un lavage de gaz à l'aide d'eau ou d'une solution alcaline aqueuse dans une colonne de lavage de gaz (13) comportant une pulvérisateur (15) et un réservoir d'eau évacuée (12), et
(C) séparer un brouillard acide contenu dans le gaz évacué de la colonne de lavage de gaz (13),
dans lequel la colonne de lavage de gaz (13) et le réservoir d'eau évacuée (12) sont maintenus sous une pression négative en aspirant le gaz évacué de la colonne de lavage de gaz (13) à travers une tuyauterie (47) raccordée à la tête de la colonne de lavage de gaz (13) et une tuyauterie (48) au moyen d'un éjecteur (24),
**caractérisé en ce que**
- à l'étape (C), des brouillards sont séparés au moyen d'un cyclone (16) comportant un compartiment supérieur (20) et un compartiment inférieur (19), l'élément d'alimentation (38) de celui-ci étant relié par l'intermédiaire de la tuyauterie (47) à la tête de la colonne de lavage de gaz (13), et la sortie d'évacuation de gaz (21) de celui-ci étant reliée par l'intermédiaire de la tuyauterie (48) à l'éjecteur (24),
- dans lequel
• le brouillard séparé du gaz et évacué de la sortie de vidange (23) du cyclone (16) agencée dans le fond du compartiment inférieur (19) de celui-ci est évacué à travers une tuyauterie d'évacuation (53) dans le réservoir (12), et
• le cyclone (16) utilisé comporte une sortie de vidange supplémentaire (22) agencée dans le compartiment supérieur (20) où des brouillards entraînés dans le gaz évacué sont séparés et évacués à travers la sortie de vidange supplémentaire (22) et une tuyauterie de vidange (54) dans le réservoir (12).

2. Procédé selon la revendication 1, **caractérisé en ce qu'**un condensat contenu dans le gaz évacué de l'éjecteur (24) est acheminé à travers une tuyauterie de vidange de condensat (55) jusqu'au réservoir (12).

3. Procédé selon la revendication 1 ou 2, **caractérisé en ce que** les composés perfluorés sont décomposés par voie catalytique à l'étape (A).

4. Procédé selon l'une quelconque des revendications 1 à 3, **caractérisé en ce que** les composés perfluorés sont inclus dans un gaz évacué d'une installation de production de semi-conducteurs.

5. Dispositif (1) pour traiter des composés perfluorés contenus dans un gaz acheminé jusqu'à celui-ci, lequel comporte :
- un dispositif de décomposition de composés perfluorés (2, 3) pour décomposer les composés perfluorés contenus dans le gaz,
- une colonne de lavage de gaz (13) pour retirer des gaz acides du gaz résultant de la décomposition des composés perfluorés dans le dispositif de décomposition de composés perfluorés (2, 3) au moyen d'un pulvérisateur (15) d'eau ou d'une solution alcaline aqueuse,
- un réservoir (12) agencé sous la colonne de lavage de gaz (13) pour recevoir l'eau ou la solution alcaline aqueuse utilisée pour le lavage de gaz,
- des moyens de séparation de brouillard (16) agencés en aval du pulvérisateur (15),
et
- un éjecteur (24) pour maintenir la colonne de lavage de gaz (13) et le réservoir (12) sous une pression négative en aspirant le gaz évacué de la colonne de lavage de gaz (13) à travers une tuyauterie (47) raccordée à la tête de la colonne de lavage de gaz (13) et une tuyauterie (48),
**caractérisé en ce que**
- les moyens de séparation de brouillard sont un cyclone (16) comportant un compartiment supérieur (20) et un compartiment inférieur (19), l'élément d'alimentation (38) de ceux-ci étant raccordé par l'intermédiaire de la tuyauterie (47) à la tête de la colonne de lavage de gaz (13) et la sortie d'évacuation de gaz (21) de ceux-ci étant raccordée par l'intermédiaire de la tuyauterie (48) à l'éjecteur (24),
- dans lequel
• la sortie de vidange (23) du cyclone (16) agencée dans le fond du compartiment inférieur de celui-ci est raccordée par l'intermédiaire d'une tuyauterie d'évacuation (53) au réservoir (12), et
• le cyclone (16) comporte une sortie de vidange supplémentaire (22) agencée dans le compartiment supérieur (20) pour évacuer des brouillards entraînés dans le gaz évacué et séparés dans le compartiment supérieur (20), la sortie de vidange supplémentaire (22) étant raccordée par l'intermédiaire d'une tuyauterie de vidange (54) au réservoir (12).

6. Dispositif selon la revendication 5, **caractérisé en ce que** l'éjecteur (24) est raccordé à une conduite de gaz évacué (75) par l'intermédiaire d'une tuyauterie (49) raccordée à une tuyauterie de vidange de condensat (55) raccordée au réservoir (12) pour acheminer un condensat contenu dans le gaz évacué de l'éjecteur (24) jusqu'au réservoir (12).

7. Dispositif selon la revendication 5 ou 6, **caractérisé en ce que** le dispositif de décomposition de composés perfluorés (2, 3) est un réacteur (2) comportant un catalyseur compacté (3) et un dispositif de chauffage (4) pour la décomposition catalytique thermique des composés perfluorés.

8. Dispositif selon la revendication 7, **caractérisé en ce que** le catalyseur contient un oxyde d'Al et également un oxyde d'un métal choisi parmi Zn, Ni, Ti, Fe, Sn, Co, Zr, Ce, Si et Pt.

9. Dispositif selon l'une quelconque des revendications 5 à 8, **caractérisé en ce qu'**il comprend des moyens pour arrêter l'alimentation en gaz d'entraînement de l'éjecteur (24), lorsque la pression du gaz d'entraînement jusqu'à l'éjecteur (24) dépasse une pression établie.
